# EUROPEAN PATENT SPECIFICATION

(11) **EP 3 170 684 B1**
(45) Date of publication and mention of the grant of the patent: **22.08.2018**
(21) Application number: 16199096.5
(22) Date of filing: 16.11.2016
(51) Int. Cl.: B60C 23/12

(54) **VALVE STEM-BASED AIR MAINTENANCE TIRE AND METHOD**
VENTILSCHAFTBASIERTER, LUFTAUFRECHTERHALTENDER REIFEN UND VERFAHREN
MAINTIEN DE PRESSION D'AIR DANS UN PNEU À L'AIDE D'UNE TIGE DE VALVE ET PROCÉDÉ

(30) Priority: 19.11.2015 US 201514945995; 19.11.2015 US 201514946005
(43) Date of publication of application: 24.05.2017
(73) Proprietor: The Goodyear Tire & Rubber Company, Akron, Ohio 44316 (US)
(72) Inventor: LAMGADAY, Robin, Wadsworth, OH Ohio 44281 (US); LIN, Cheng-Hsiung, Hudson, OH Ohio 44236 (US); GOPALA, Arun Kumar Byatarayanapura, Copley, OH Ohio 44321 (US)
(74) Representative: Kutsch, Bernd

(56) References cited:
- EP-A1- 2 985 158
- EP-A1- 3 012 126
- EP-A1- 3 130 487

## Description

### Field of the Invention

The present invention relates generally to air maintenance tires and, more specifically, to a valve stem-based air maintenance tire for maintaining tire air pressure.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will self-maintain the tire air pressure in order to compensate for any reduction in tire pressure over time without a need for driver intervention.

EP-A-3 130 487, which has been published only after the priority date of this application, describes a self-inflating tire having a groove in the tire sidewall deforming segment by segment when the tire rolls under load. The tire comprises an air pumping means and a valve housing disposed adjacent an outward end of a valve stem. The valve housing is operative to selectively open and close to enable a pressurized air flow from a valve stem internal passageway into the tire cavity.

Further air maintenance tires comprising a valve assembly or a valve stem located control regulator respectively are described in EP-A-3 012 126, which has also been published only after the priority date of this application, and in EP-A-2 985 158.

### Summary of the Invention

The invention relates to a tire in accordance with claim 1.

Dependent claims refer to preferred embodiments of the invention.

An air maintenance tire assembly in accordance with a preferred aspect of the present invention includes a tire having a tire cavity bounded by first and second sidewalls extending to a tire tread region, air pumping means for generating pressurized air for maintaining air pressure within the tire cavity at a preset pressure level, and a valve housing, preferably a facted valve housing or a cylindrical valve housing, disposed adjacent an outward end of the valve stem and operative to selectively open and close pressurized air flow from the valve stem internal passageway into the tire cavity. The first sidewall has at least one bending region operatively bending within a rolling tire footprint and a sidewall groove defined by groove sidewalls positioned within the bending region of the first tire sidewall. The groove deforms segment by segment between a non-deformed state and a deformed, constricted state in response to the bending of the first sidewall bending region within the rolling tire footprint.

According to a preferred aspect of the invention, the valve housing includes a check valve for maintaining air pressure in the tire cavity at the preset pressure level.

According to a preferred aspect of the invention, the valve housing is a faceted valve housing. According to another preferred aspect of the invention, the valve housing is a cylindrical valve housing.

According to a preferred aspect of the invention, the assembly, the valve housing is constructed of a polymer.

According to a preferred aspect of the invention, the valve housing further includes a relief valve that opens and closes to place the air pumping means in "open" and "closed" conditions.

According to a preferred aspect of the invention, the air pumping means has a tube within the first tire sidewall. The tube is incrementally flattened by rotation of the tire under load.

According to a preferred aspect of the invention, the valve housing further includes a manual fill assembly disposed at an outer end of the valve housing.

According to a preferred aspect of the invention, a manual fill assembly of the valve housing includes a check valve such that the tire cavity may be manually pressurized identically to manual pressurization directly through the valve stem.

According to a preferred aspect of the invention, as the tire continues to rotate under load along a ground surface, a part of a tube of the air pumping means is sequentially squeezed when the part is adjacent a tire footprint.

According to a preferred aspect of the invention, sequential flattening of part of the air pumping means, segment by segment, directs air to the valve housing and the tire cavity.

According to a preferred aspect of the invention, when air pressure within the tire cavity is below the preset pressure level, air passes through the valve housing, through the valve stem, and into the tire cavity.

According to a preferred aspect of the invention, when air pressure in the tire cavity is at the preset pressure level, air is vented through a relief valve to atmosphere.

A method maintains a predetermined air pressure within a tire. The method preferably includes the steps of: positioning an elongate valve stem to project outward from a tire cavity of the tire, the valve stem having an elongate internal air passageway for delivering pressurized air into the tire cavity; positioning a valve housing, preferably a facted valve housing or a cylindrical valve housing, onto the valve stem; selectively opening and closing the valve stem internal air passageway to control pressurized air flow from the valve stem internal passageway into the tire cavity; and coupling an air pumping means to the valve housing such that pressurized air is directed through an outward end of the valve stem internal passageway and into the tire cavity. The air pumping means includes a first sidewall of the tire with at least one bending region operatively bending when adjacent a tire footprint and a sidewall groove defined by groove sidewalls positioned within the bending region of the first tire sidewall, the groove deforming segment by segment between a non-deformed state and a deformed, constricted state in response to the bending of the first sidewall bending region within the tire footprint.

According to a preferred aspect of the invention, the method further steps include supporting the tire on a rim, extending the valve stem from the tire through an aperture in the rim, and positioning the valve housing external to the tire cavity.

According to a preferred aspect of the invention, the method comprises providing a check valve in the valve stem that selectively opens and closes an air passage from the valve stem passageway into the tire cavity.

According to a preferred aspect of the invention, the method comprises a further step of including a relief valve within the valve housing.

According to still another preferred aspect of the method, further steps include coupling an internal chamber of the valve housing to receive pressurized air the air pumping means and selectively opening and closing a check valve of the valve stem responsive to a presence and absence of pressurized air within the internal chamber.

According to yet another preferred aspect of the method, further steps include extending the valve stem from the tire through an aperture extending through a rim supporting the tire and mounting the valve housing to the valve stem.

According to still another preferred aspect of the method, further steps include positioning an air passageway within a first tire sidewall operatively located to compress, segment by segment, from an expanded diameter to a substantially reduced diameter responsive to a bending strain introduced into the first sidewall from the rotating tire under load thereby forcing air, segment by segment, along the sidewall air passageway and connecting the air passageway to a radially outward end of the valve stem thereby directing pressurized air to the tire cavity.

### Definitions

"Axial" and "axially" means lines or directions that are parallel to the axis of rotation of the tire.

"Circumferential" means lines or directions extending along the perimeter of the surface of the annular tread perpendicular to the axial direction.

"Faceted" means having smooth flat planar surfaces.

"Footprint" means the contact patch or area of contact of the tire tread with a flat surface at zero speed and under normal load and pressure.

"Lateral" means an axial direction.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The present invention will be described by way of example and with reference to the accompanying drawings, in which:
Fig. 1 is a schematic perspective view of a first embodiment of the invention showing the assembly, tire, tube and pump location.
Fig. 2 is a schematic side view of Fig. 1.
Fig. 3 is a schematic view of the first embodiment of the invention showing a pump sub-assembly with the pump tube connection to an AMT valve stem regulator in accordance with the present invention.
Fig. 4 is a schematic enlarged view taken from Fig. 3 showing the pump tube transfer housing and the tire AMT valve stem regulator.
Fig. 5 is a schematic view of the first embodiment of the invention showing a pump sub-assembly with the pump tube connection to the AMT valve stem regulator with the tire rotating in a first direction.
Fig. 6 is a schematic view of the first embodiment of the invention showing a pump sub-assembly with the pump tube connection to the AMT valve stem regulator with the tire rotating in a second opposite direction.
Fig. 7 is a schematic perspective view of a second embodiment of the invention showing the assembly, tire, tube and pump location.
Fig. 8 is a schematic side view of Fig. 7.
Fig. 9 is a schematic view of the second embodiment of the invention showing a pump sub-assembly with the pump tube connection to an AMT valve stem regulator in accordance with the present invention.
Fig. 10 is a schematic enlarged view taken from Fig. 9 showing the pump tube transfer housing and the tire AMT valve stem regulator.
Fig. 11 is a schematic view of the second embodiment of the invention showing a pump sub-assembly with the pump tube connection to the AMT valve stem regulator with the tire rotating in a first direction.
Fig. 12 is a schematic view of the second embodiment of the invention showing a pump sub-assembly with the pump tube connection to the AMT valve stem regulator with the tire rotating in a second opposite direction.

### Detailed Description of Example Embodiments of the Present Invention

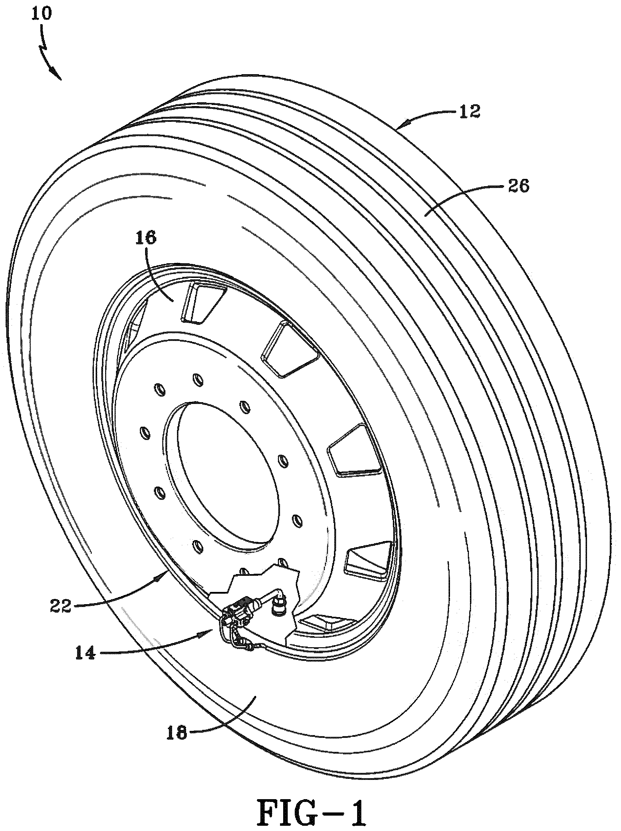

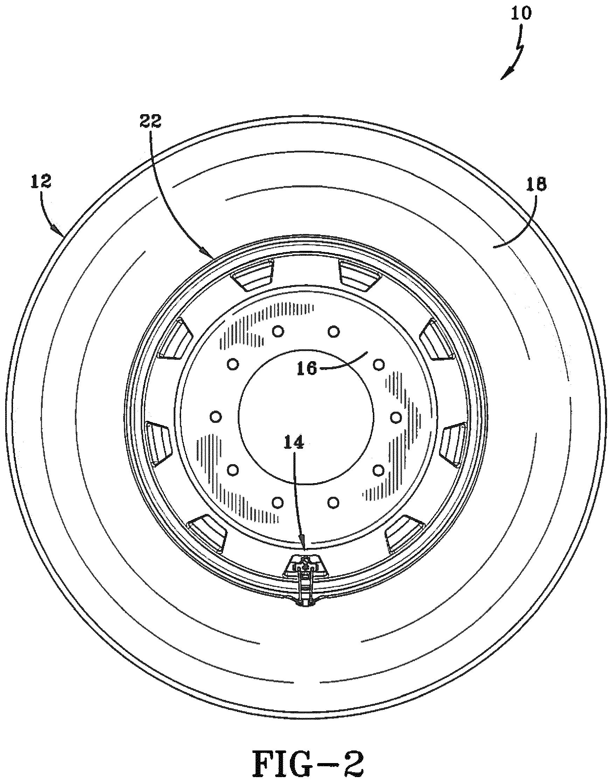

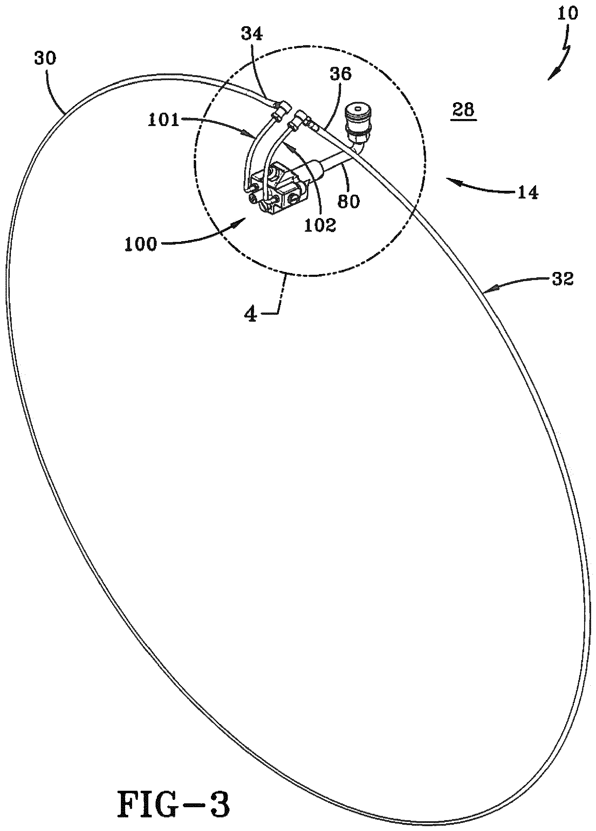

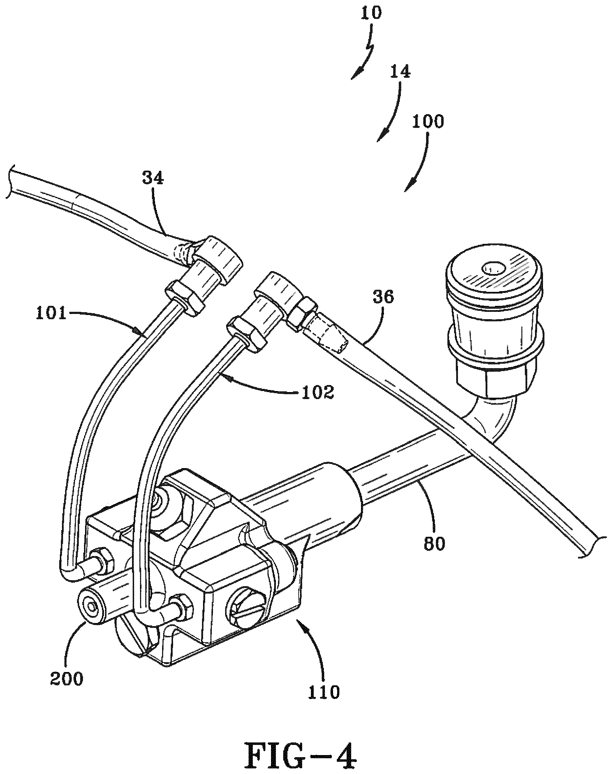

Referring to Figs. 1-6, a tire assembly 10 in accordance with a first embodiment of the present invention is disclosed. It shows a tire 12, a peristaltic pump assembly 14, and a tire rim 16. The tire 12 preferably mounts in conventional fashion to the rim 16. The tire 12 may be of conventional construction, having a pair of sidewalls (only sidewall 18 being shown) extending from opposite bead areas (only bead area 22 being shown) to a crown or tire tread region 26. The tire 12 and rim 16 together enclose a tire cavity 28.

The peristaltic pump assembly 14 preferably includes an annular air tube 30 that encloses an annular groove, or passageway or channel. The tube 30 is preferably be formed of a resilient, flexible material, such as plastic or rubber compounds, that is capable of withstanding repeated deformation cycles. So constructed, the tube 30 may deform within a tire 12 into a flattened condition subject to external force and, upon removal of such force, return to an initial condition. In the example shown, the cross-section of the tube 30 in an unstressed state may be generally circular, but alternative cross-section geometries may also be used. The tube 30 is of a diameter sufficient to operatively transfer a requisite volume of air for the purpose of pumping air into the tire cavity 28 to maintain the tire 12 at a preferred inflation pressure.

The peristaltic principles of incorporating a deformable air tube within a tire are shown and described in US-B-8,113,254. In this system, the tube is incorporated within an annular tire passageway formed within the tire proximate a tire bead region. As the tire rotates under load, air from outside the tire is admitted into the tube and pumped along the air tube by the progressive squeezing of the tube within the tire as the tire rotates. Air is thus forced into an outlet valve and then into the tire to maintain air pressure within the tire cavity at a desired pressure level.

The tube 30 preferably mount closely within the groove in the tire 12 and sequentially flatten as the tire rotates under load. The segment by segment flattening of the tube 30 as the tire 12 pumps air along the air passageway/groove and into the tire cavity 28 to maintain air pressure. A peristaltic pumping system 14 employing the tube 30 within a sidewall groove is shown in US-B-8,042,586.

The pump tube 30 is preferably generally annular and preferably circumscribes a lower tire sidewall region proximate to the bead region 22. However, other configurations for the tube 30 may be derived without departing from the present invention. Opposite ends 34, 36 of the tube 30 connect to a pumping assembly 100. The pumping assembly 100 preferably includes two pump tubes 101, 102 for connecting the ends of the tube 30 to the pumping assembly. The pump tubes 101, 102 attach to a faceted housing 110 of the pumping assembly 14, which is preferably threadedly attached to a valve stem 80 of the tire/rim assembly 12, 16. The faceting of the valve housing allows it to reduce weight of the housing. Seated within the valve stem 80 is a one-way check valve 76 that opens and closes to admit air from the tube 30 into the tire cavity 28 during a manual filling of the tire cavity. The valve housing 110 may further have a relief valve 105 that opens and closes to place the pumping assembly 14 in "open" and "closed" states. Air may be admitted into the valve housing 110 and may be directed from the tube 30 to the tire cavity 28. As described above, the tube 30 may be incorporated into a groove within a tire sidewall and may be incrementally flattened by rotation of the tire 12 under load.

A manual fill assembly 200 may be located at the upper end, or outer end, of the valve housing 101. The manual fill assembly 200 may include a check valve 202 such that the tire cavity 28 may be pressurized manually identically to manual pressurization directly through the valve stem 80.

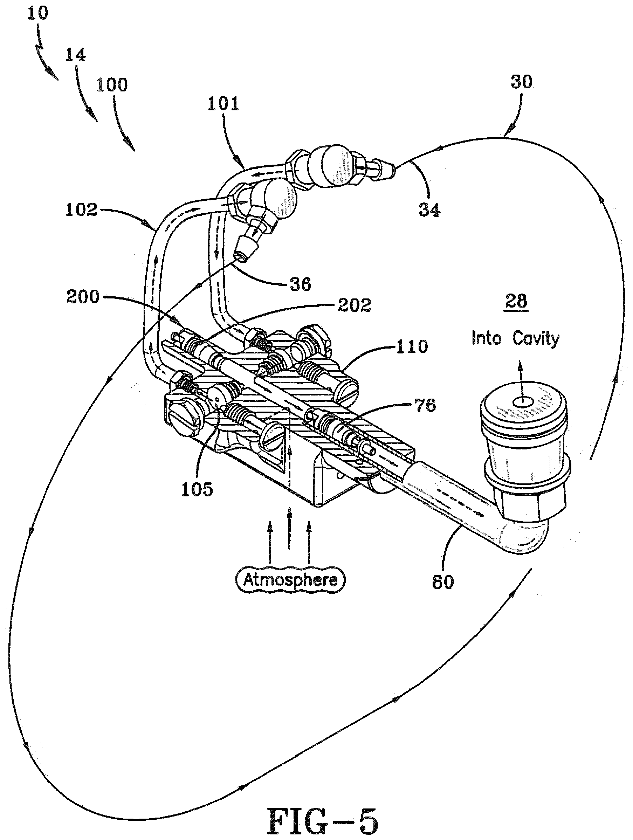

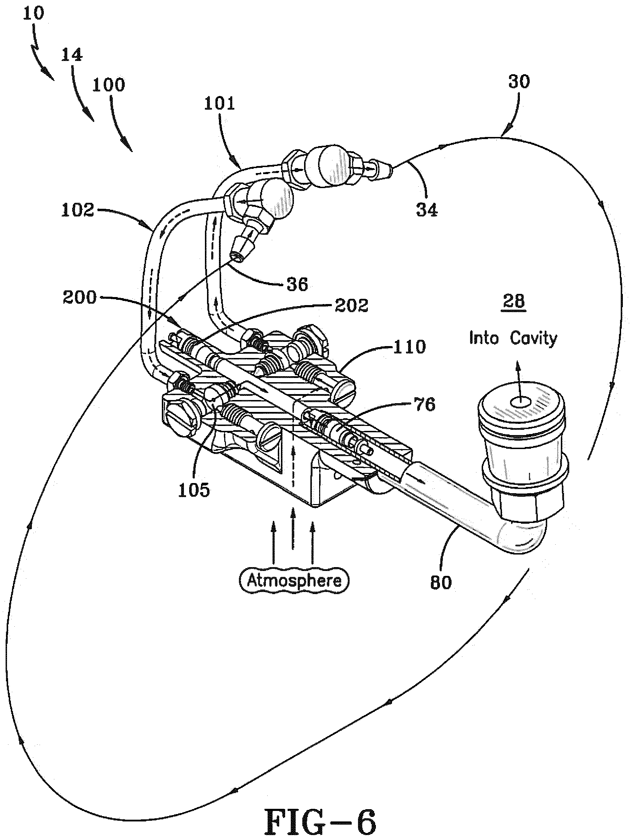

FIGS. 5 and 6, respectively, show schematic diagram of the AMT assembly 10 for a counterclockwise rotation of the tire 12 (FIG. 5) and a clockwise rotation of the tire 12 (FIG. 6). As the tire 12 continues to rotate under load along a ground surface, the tube 30 may be sequentially flattened, or squeezed, when adjacent the tire footprint. The sequential flattening of the tube passageway, segment by segment, may direct evacuated air from the flattened segments to be pumped in the directions shown in FIGS. 5 and 6 to the housing 110.

When the air flow pressure is sufficient against the check valve 76, air may flow through the valve stem 80 and into the tire cavity 28 (FIG. 5). When air pressure within the tire cavity 28 is below the set pressure, air may pass from the connecting tube 70 to the valve housing 110 into the valve stem 80 and tire cavity. When air pressure within the tire cavity 28 is at or above the set pressure (FIG. 6), the check valve 76 closes and air cannot be pumped from the valve housing 110 into the valve stem 80. Instead, pressurized air may be retained within the valve housing 110 until vented through the relief valve 105 to atmosphere.

The check valve 76 of the valve stem 80 and the check valve 202 of the manual fill assembly 200 may include a conventional valve stem core used for conventional inflation of tires and a valve core. The valve core may be a "Schrader Valve Core" and include an elongate housing through which a valve shaft extends. A valve seal component may seat within the elongate housing and be coupled to the valve shaft. A biasing spring may encircle the valve shaft and bias the sealing component within the elongate housing in an "up", or "closed" position against the valve seal component. An air passageway through the valve core may be biased in the "closed" state until the valve shaft moves and the valve sealing component is moved thereby to a "down", or "open" position thereby allowing atmospheric air to enter the air passageway and be directed toward the tire cavity 28.

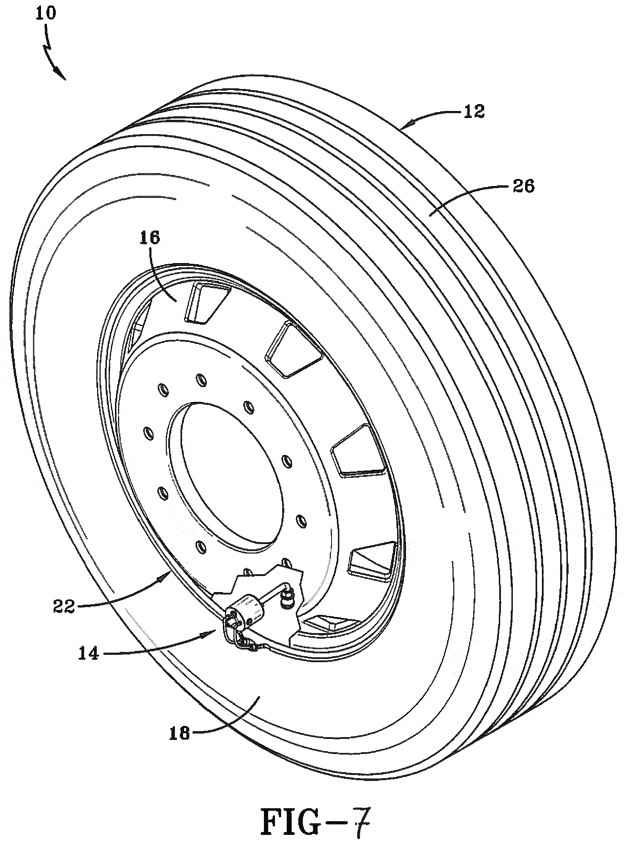

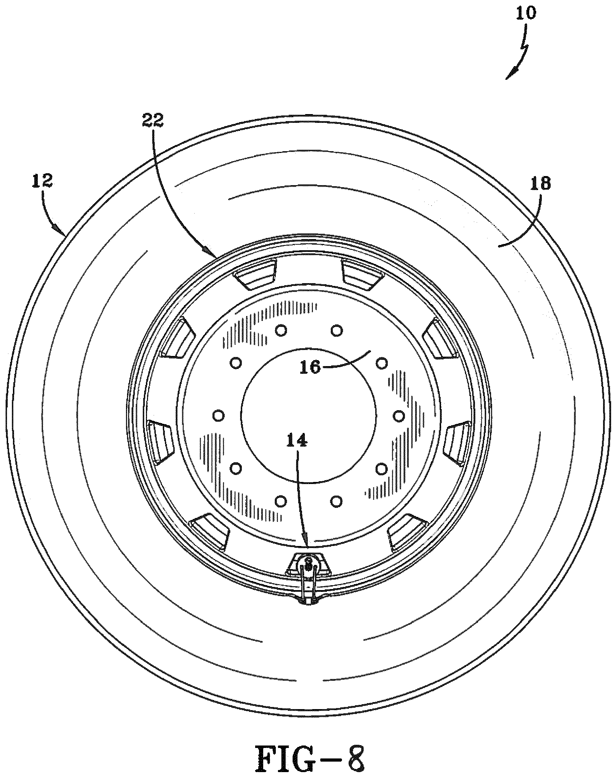

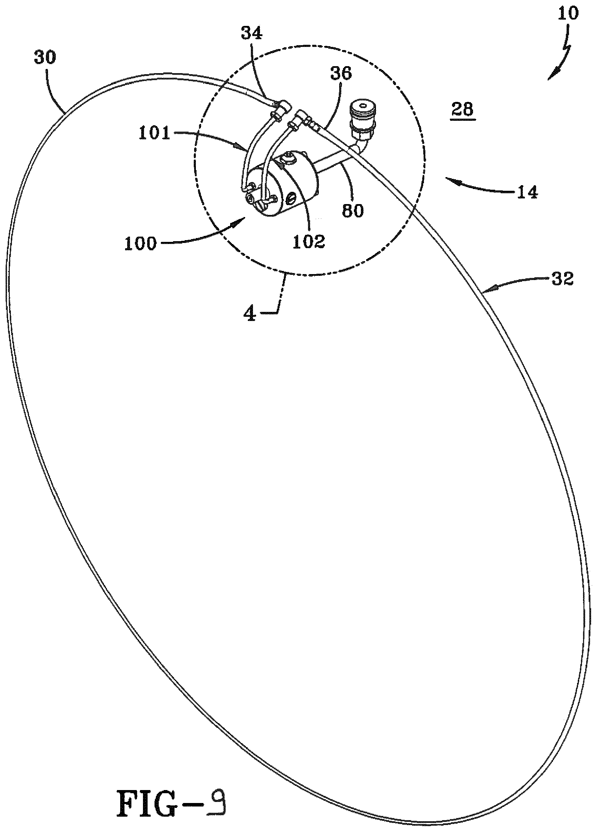

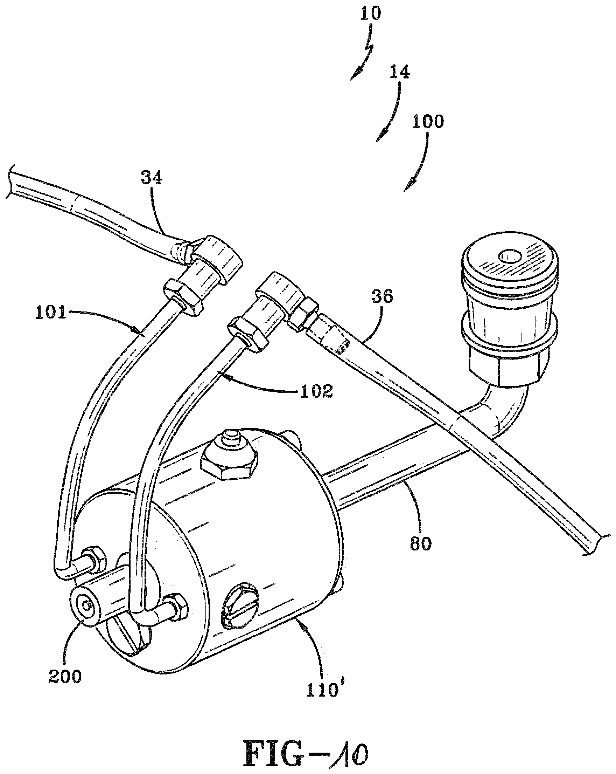

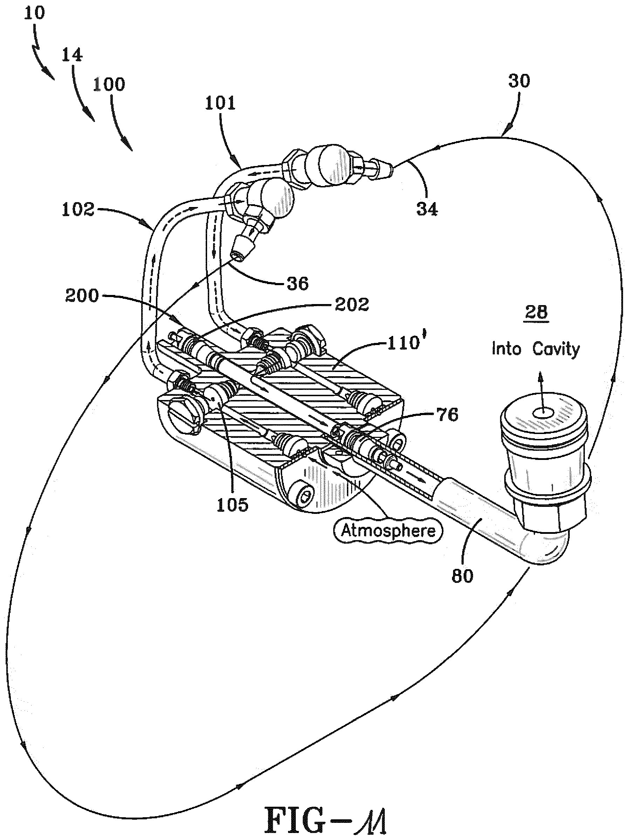

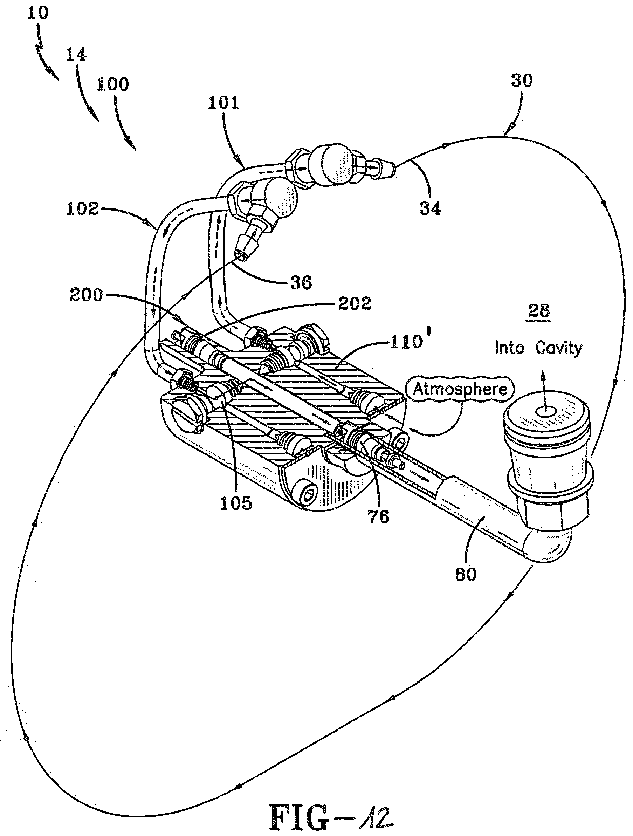

Referring to Figs. 7-12, a tire assembly 10 in accordance with a second embodiment of the present invention is disclosed. The first and the second embodiment are the same with respect to design and operation except that the facted housing 110 of the first embodiment is a cylindrical housing 110' in the second embodiment. The cylindrical housing 110' has a smooth surface and is compact, robust and resistant against damages or impact from the outside.

## Claims

1. An air maintenance tire comprising a tire cavity (28) bounded by first and second sidewalls (18) extending to a tire tread region (26), air pumping means (14) for generating pressurized air for maintaining air pressure within the tire cavity (28) at a preset pressure level, and a valve housing (110) disposed onto an outward end of a valve stem (80), wherein the valve housing (110) is operative to selectively open and close pressurized air flow from an outward end of a valve stem internal passageway into the tire cavity (28), the first sidewall (18) having at least one bending region operatively bending within a rolling tire footprint and a sidewall groove or channel defined by respective walls positioned within the bending region of the first sidewall (18), the groove or channel deforming segment by segment between a non-deformed state and a deformed, constricted state in response to the bending of the first sidewall (18) bending region within the rolling tire footprint, and wherein the air pumping means (14) includes an annular air tube (30) and two pump tubes (101, 102) for connecting the ends of the tube (30) to the housing (110).

2. The air maintenance tire as set forth in claim 1 wherein the valve housing (110) includes a check valve (76) for maintaining air pressure in the tire cavity (28) at the preset pressure level.

3. The air maintenance tire as set forth in claim 1 or 2 wherein the valve housing (110) is constructed of a polymer.

4. The air maintenance tire as set forth in at least one of the previous claims wherein the valve housing (110) is a faceted valve housing or a cylindrical valve housing.

5. The air maintenance tire as set forth in at least one of the previous claims wherein the valve housing (110) further includes a relief valve (105) that can open and close to place the air pumping means (14) in "open" and "closed" conditions.

6. The air maintenance tire as set forth in at least one of the previous claims wherein the valve housing (110) further includes a manual fill assembly (200) disposed at an outer end of the valve housing (110).

7. The air maintenance tire as set forth in at least one of the previous claims wherein a manual fill assembly (200) of the valve housing (110) includes a check valve (202) such that the tire cavity (28) may be manually pressurized identically to manual pressurization directly through the valve stem (80).

8. The air maintenance tire as set forth in at least one of the previous claims wherein the valve housing (110), preferably the faceted valve housing or the cylindrical valve housing, is positioned onto the valve stem (80).

9. A method of maintaining a predetermined air pressure within a tire (12), the method comprising the steps of:
positioning an elongate valve stem (80) to project outward from a tire cavity (28) of the tire (12), the valve stem (80) having an elongate internal air passageway for delivering pressurized air into the tire cavity (28);
positioning a valve housing (110), preferably a faceted valve housing or a cylindrical valve housing, onto the valve stem (80);
selectively opening and closing the valve stem internal air passageway to control pressurized air flow from the valve stem internal passageway into the tire cavity (28); and
coupling an air pumping means (14) to the valve housing (110) such that pressurized air is directed through an outward end of the valve stem internal passageway and into the tire cavity (28), the air pumping means (14) including an annular air tube (30) and two pump tubes (101, 102) for connecting the ends of the tube (30) to the housing (110).

10. The method of claim 9 wherein the air pumping means (14) includes a first sidewall (18) of the tire (12) with at least one bending region operatively bending when adjacent a tire footprint and a sidewall groove or channel defined by sidewalls positioned within the bending region of the first sidewall (18), the groove or channel deforming segment by segment between a non-deformed state and a deformed, constricted state in response to the bending of the first sidewall bending region within the tire footprint.

11. The method as set forth in claim 9 or 10 further comprising the steps of:
supporting the tire (12) on a rim;
extending the valve stem (80) from the tire (12) through an aperture in the rim; and
positioning the valve housing (110) external to the tire cavity (28).

12. The method as set forth in claim 9, 10 or 11 further comprising a check valve (76) in the valve stem (80) for selectively opening and closing an air passage from the valve stem passageway into the tire cavity (28).

13. The method as set forth in at least one of the previous claims 9 to 12, further comprising the step of incorporating a relief valve (105) within the valve housing (110).

14. The method as set forth in at least one of the previous claims 9 to 13, further comprising the steps of:
coupling an internal chamber of the valve housing to receive pressurized air by the air pumping means (14); and
selectively opening and closing a check valve (76) of the valve stem (80) responsive to a presence and absence of pressurized air within the internal chamber.

15. The method as set forth in at least one of the previous claims 9 to 14, further comprising the steps of:
positioning an air passageway within a first sidewall (18) operatively located to compress, segment by segment, from an expanded diameter to a substantially reduced diameter responsive to a bending strain introduced into the first sidewall (18) from the rotating tire (12) under load thereby forcing air, segment by segment, along the sidewall air passageway; and
connecting the air passageway to a radially outward end of the valve stem (80) thereby directing pressurized air to the tire cavity (28).

## Patentansprüche

1. Reifen mit Luftdruckwartung, umfassend einen Reifenhohlraum (28), der von einer ersten und einer zweiten Seitenwand (18), die sich zu einem Reifenlaufflächenbereich (26) erstrecken, begrenzt wird, Luftpumpmittel (14) zur Erzeugung von Druckluft zur Aufrechterhaltung des Luftdrucks in dem Reifenhohlraum (28) auf einem voreingestellten Druckniveau, und ein Ventilgehäuse (110), das auf einem auswärts befindlichen Ende eines Ventilschafts (80) angeordnet ist, wobei das Ventilgehäuse (110) wirksam ist, um Druckluftstrom von einem auswärts befindlichen Ende eines inneren Durchgangs des Ventilschafts in den Reifenhohlraum (28) selektiv zu öffnen und abzuschließen, wobei die erste Seitenwand (18) mindestens einen Biegebereich, der sich wirksam in einer rollenden Reifenaufstandsfläche verbiegt, und eine durch jeweilige Wände definierte Seitenwandnut oder -kanal, die bzw. der in dem Biegebereich der ersten Seitenwand (18) angeordnet ist, aufweist, wobei die Nut oder der Kanal, in Reaktion auf das Verbiegen des Biegebereichs der ersten Seitenwand (18) in der rollenden Reifenaufstandsfläche, sich Segment für Segment zwischen einem nicht verformten Zustand und einem verformten, verengten Zustand verformt, und wobei das Luftpumpmittel (14) einen ringförmigen Luftschlauch (30) und zwei Pumpschläuche (101, 102) zum Verbinden der Enden des Schlauchs (30) mit dem Gehäuse (110) beinhaltet.

2. Reifen mit Luftdruckwartung nach Anspruch 1, wobei das Ventilgehäuse (110) ein Rückschlagventil (76) zur Aufrechterhaltung des Luftdrucks in dem Reifenhohlraum (28) auf dem voreingestellten Druckniveau beinhaltet.

3. Reifen mit Luftdruckwartung nach Anspruch 1 oder 2, wobei das Ventilgehäuse (110) aus einem Polymer ausgeführt ist.

4. Reifen mit Luftdruckwartung nach mindestens einem der vorhergehenden Ansprüche, wobei das Ventilgehäuse (110) ein facettiertes Ventilgehäuse oder ein zylindrisches Ventilgehäuse ist.

5. Reifen mit Luftdruckwartung nach mindestens einem der vorhergehenden Ansprüche, wobei das Ventilgehäuse (110) weiter ein Überdruckventil (105) beinhaltet, das sich öffnen und schließen kann, um das Luftpumpmittel (14) in einen "offenen" und einen "geschlossenen" Zustand zu versetzen.

6. Reifen mit Luftdruckwartung nach mindestens einem der vorhergehenden Ansprüche, wobei das Ventilgehäuse (110) weiter eine manuelle Füllanordnung (200) beinhaltet, die an einem äußeren Ende des Ventilgehäuses (110) angeordnet ist.

7. Reifen mit Luftdruckwartung nach mindestens einem der vorhergehenden Ansprüche, wobei eine manuelle Füllanordnung (200) des Ventilgehäuses (110) ein Rückschlagventil (202) beinhaltet, sodass der Reifenhohlraum (28) manuell unter Druck gesetzt werden kann, identisch zu manueller Druckbeaufschlagung direkt durch den Ventilschaft (80).

8. Reifen mit Luftdruckwartung nach mindestens einem der vorhergehenden Ansprüche, wobei das Ventilgehäuse (110), bevorzugt das facettierte Ventilgehäuse oder das zylindrische Ventilgehäuse, auf dem Ventilschaft (80) angeordnet ist.

9. Verfahren zur Aufrechterhaltung eines vorgegebenen Luftdrucks in einem Reifen (12), wobei das Verfahren folgende Schritte umfasst:
Anordnen eines länglichen Ventilschafts (80), sodass er von einem Reifenhohlraum (28) des Reifens (12) nach außen ragt, wobei der Ventilschaft (80) einen länglichen inneren Luftdurchgang zur Zufuhr von Druckluft in den Reifenhohlraum (28) aufweist;
Anordnen eines Ventilgehäuses (110), bevorzugt eines facettierten Ventilgehäuses oder eines zylindrischen Ventilgehäuses, auf dem Ventilschaft (80);
selektiv Öffnen und Schließen des inneren Luftdurchgangs des Ventilschafts, um den Druckluftstrom von dem inneren Durchgang des Ventilschafts in den Reifenhohlraum (28) zu steuern; und
Koppeln eines Luftpumpmittels (14) an das Ventilgehäuse (110), sodass Druckluft durch ein auswärtiges Ende des inneren Durchgangs des Ventilschafts und in den Reifenhohlraum (28) geleitet wird, wobei das Luftpumpmittel (14) einen ringförmigen Luftschlauch (30) und zwei Pumpschläuche (101, 102) zum Verbinden der Enden des Schlauchs (30) mit dem Gehäuse (110) beinhaltet.

10. Verfahren nach Anspruch 9, wobei das Luftpumpmittel (14) eine erste Seitenwand (18) des Reifens (12) mit mindestens einem ersten Biegebereich, der sich wirksam verbiegt, wenn er zu einer Reifenaufstandsfläche benachbart ist, und eine Seitenwandnut oder -kanal, die bzw. der durch in dem Biegebereich der ersten Seitenwand (18) angeordnete Seitenwände definiert ist, beinhaltet, wobei die Nut oder der Kanal, in Reaktion auf das Verbiegen des ersten Seitenwand-Biegebereichs in der Reifenaufstandsfläche, sich Segment für Segment zwischen einem nicht-verformten Zustand und einem verformten, verengten Zustand verformt.

11. Verfahren nach Anspruch 9 oder 10, weiter folgende Schritte umfassend:
Aufbringen des Reifens (12) auf eine Felge;
Erstrecken des Ventilschafts (80) von dem Reifen (12) durch eine Öffnung in der Felge; und
Anordnen des Ventilgehäuses (110) außerhalb des Reifenhohlraums (28).

12. Verfahren nach Anspruch 9, 10 oder 11, weiter ein Rückschlagventil (76) in dem Ventilschaft (80) zum selektiven Öffnen und Schließen eines Luftdurchgangs von dem Ventilschaft-Luftdurchgang in den Reifenhohlraum (28) umfassend.

13. Verfahren nach mindestens einem der vorhergehenden Ansprüche 9 bis 12, weiter den Schritt des Integrierens eines Überdruckventils (105) in das Ventilgehäuse (110) umfassend.

14. Verfahren nach mindestens einem der vorhergehenden Ansprüche 9 bis 13, weiter folgende Schritte umfassend:
Koppeln einer inneren Kammer des Ventilgehäuses zur Aufnahme von Druckluft von dem Luftpumpmittel (14); und
selektiv Öffnen und Schließen eines Rückschlagventils (76) des Ventilschafts (80) in Reaktion auf ein Vorhandensein und Nichtvorhandensein von Druckluft in der inneren Kammer.

15. Verfahren nach mindestens einem der vorhergehenden Ansprüche 9 bis 14, weiter folgende Schritte umfassend:
Anordnen eines Luftdurchgangs in einer ersten Seitenwand (18), der wirksam angeordnet ist, um sich, in Reaktion auf eine von dem rotierenden Reifen (12) unter Last in die erste Seitenwand (18) eingebrachte Biegebeanspruchung, Segment für Segment von einem expandierten Durchmesser auf einen im Wesentlichen reduzierten Durchmesser zu komprimieren, wodurch Luft, Segment für Segment, durch den Seitenwand-Luftdurchgang hindurch gedrückt wird; und
Verbinden des Luftdurchgangs mit einem radial auswärts befindlichen Ende des Ventilschafts (80), wodurch Druckluft zu dem Reifenhohlraum (28) geleitet wird.

## Revendications

1. Bandage pneumatique du type qui maintient l'air, comprenant une cavité de bandage pneumatique (28) délimitée par un premier et un second flancs (18) s'étendant en direction d'une zone (26) faisant office de bande de roulement de bandage pneumatique, un moyen de pompage pour l'air (14) pour générer de l'air mis sous pression afin de maintenir la pression d'air au sein de la cavité de bandage pneumatique (28) à un niveau de pression préréglé, et un logement de soupape (110) disposé sur une extrémité externe d'une tige de soupape (80), dans lequel le logement de soupape (110) peut être utilisé pour ouvrir et fermer de manière sélective l'écoulement d'air mis sous pression à partir d'une extrémité externe d'un passage interne de la tige de soupape jusque dans la cavité de bandage pneumatique (28), le premier flanc (18) possédant au moins une zone flexible qui fléchit de manière opérationnelle au sein d'une empreinte du bandage pneumatique en train de rouler et une rainure ou un canal de flanc défini par des parois respectives disposées au sein de la zone flexible du premier flanc (18), la rainure ou le canal se déformant de manière progressive segment par segment entre un état non déformé et un état resserré déformé, en réponse à la flexion de la zone flexible du premier flanc (18) au sein de l'empreinte du bandage pneumatique en train de rouler, et dans lequel le moyen de pompage pour l'air (14) englobe un tube annulaire pour l'air (30) et deux tubes de pompage (101, 102) destinés à relier les extrémités du tube (30 au logement (110).

2. Bandage pneumatique du type qui maintient l'air selon la revendication 1, dans lequel le logement de soupape (110) englobe un clapet de non retour (76) pour le maintien de la pression d'air au sein de la cavité (28) du bandage pneumatique au niveau de pression préréglé.

3. Bandage pneumatique du type qui maintient l'air selon la revendication 1 ou 2, dans lequel le logement de soupape (110) est constitué d'un polymère.

4. Bandage pneumatique du type qui maintient l'air selon au moins une des revendications précédentes, dans lequel le logement de soupape (110) est un logement de soupape du type à facettes ou un logement de soupape cylindrique.

5. Bandage pneumatique du type qui maintient l'air selon au moins une des revendications précédentes, dans lequel le logement de soupape (110) englobe en outre une soupape de sécurité (105) qui peut s'ouvrir ou se fermer afin de mettre le moyen de pompage pour l'air (14) dans des positions « ouverte » et « fermée ».

6. Bandage pneumatique du type qui maintient l'air selon au moins une des revendications précédentes, dans lequel le logement de soupape (110) englobe en outre un assemblage de remplissage manuel (200) disposé à une extrémité externe du logement de soupape (110).

7. Bandage pneumatique du type qui maintient l'air selon au moins une des revendications précédentes, dans lequel un assemblage de remplissage manuel (200) du logement de soupape (110) englobe un clapet de non retour (202) d'une manière telle que la cavité (28) du bandage pneumatique peut être mise sous pression de manière manuelle d'une façon identique à une mise sous pression manuelle directement via la tige de soupape (80).

8. Bandage pneumatique du type qui maintient l'air selon au moins une des revendications précédentes, dans lequel le logement de soupape (110), de préférence le logement de soupape du type à facettes ou le logement de soupape cylindrique, est disposé sur la tige de soupape (80).

9. Procédé pour maintenir une pression d'air prédéterminée au sein d'un bandage pneumatique (12), le procédé comprenant les étapes consistant à :
positionner une tige de soupape allongée (80) pour qu'elle fasse saillie à l'extérieur d'une cavité (28) du bandage pneumatique (12), la tige de soupape (80) possédant un passage interne allongé pour l'air dans le but de distribuer de l'air mis sous pression dans la cavité (28) du bandage pneumatique ;
positionner un logement de soupape (110), de préférence, un logement de soupape du type à facettes ou un logement de soupape cylindrique, sur la tige de soupape (80) ;
ouvrir et fermer de manière sélective le passage interne pour l'air de la tige de soupape afin de régler un écoulement d'air mis sous pression à partir du passage interne de la tige de soupape jusque dans la cavité (28) du bandage pneumatique ;
accoupler un moyen de pompage pour l'air (14) au logement de soupape (110) d'une manière telle que de l'air mis sous pression est dirigé à travers une extrémité externe du passage interne pour l'air de la tige de soupape et jusque dans la cavité (28) du bandage pneumatique, le moyen de pompage pour l'air (14) englobant un tube annulaire pour l'air (30) et deux tubes de pompage (101, 102) destinés à relier les extrémités du tube (30 au logement (110).

10. Procédé selon la revendication 9, dans lequel le moyen de pompage pour l'air (14) englobe un premier flanc (18) du bandage pneumatique (12) comprenant au moins une zone flexible qui fléchit de manière opérationnelle lorsqu'elle se trouve en position adjacente à une empreinte du bandage pneumatique et une rainure ou un canal de flanc défini par des parois disposées au sein de la zone flexible du premier flanc (18), la rainure ou le canal se déformant segment par segment entre un état non déformé et un état resserré déformé, en réponse à la flexion de la zone flexible du premier flanc au sein de l'empreinte du bandage pneumatique.

11. Procédé selon la revendication 9 ou 10, comprenant en outre les étapes consistant à :
supporter le bandage pneumatique (12) sur une jante ;
étendre la tige de soupape (80) à partir du bandage pneumatique (12) à travers un orifice dans la jante ; et
positionner le logement de soupape (110) à l'extérieur de la cavité (28) du bandage pneumatique.

12. Procédé selon la revendication 9, 10 ou 11, comprenant en outre un clapet de non retour (76) dans la tige de soupape (80) pour ouvrir et fermer de manière sélective un passage pour l'air à partir du passage interne de la tige de soupape jusque dans la cavité de bandage pneumatique (28).

13. Procédé selon au moins une des revendications précédentes 9 à 12, comprenant en outre l'étape consistant à incorporer une soupape de sécurité (105) au sein du logement de soupape (110).

14. Procédé selon au moins une des revendications précédentes 9 à 13, comprenant en outre les étapes consistant à :
accoupler une chambre interne du logement de soupape pour la réception de l'air mis sous pression par le moyen de pompage pour l'air (14) ; et
ouvrir et fermer de manière sélective un clapet de non retour (76) de la tige de soupape (80) en réponse à une présence et une absence d'air mis sous pression au sein de la chambre interne.

15. Procédé selon au moins une des revendications précédentes 9 à 14, comprenant en outre les étapes consistant à :
positionner un passage pour l'air au sein d'un premier flanc (18) disposé de manière fonctionnelle pour comprimer, segment par segment, à partir d'un diamètre élargi jusqu'à un diamètre essentiellement réduit, en réponse à une contrainte de flexion introduite dans le premier flanc (18) à partir du bandage pneumatique (12) en train de rouler sous charge, en forçant ainsi l'air, segment par segment, le long du passage de flanc pour l'air ; et
relier le passage pour l'air à une extrémité externe en direction radiale de la tige de soupape (80) pour ainsi diriger de l'air mis sous pression en direction de la cavité (28) du bandage pneumatique.
